# EUROPEAN PATENT SPECIFICATION

(11) **EP 4 549 075 B1**
(45) Date of publication and mention of the grant of the patent: **04.03.2026**
(21) Application number: 24199108.2
(22) Date of filing: 09.09.2024
(51) Int. Cl.: B23K 26/06, B23K 31/00, B23K 31/12, B23K 15/02, G05B 19/4155

(54) **METHOD FOR CONTROLLING A POWER BEAM PROCESS, AND ASSOCIATED COMPUTING DEVICE AND COMPUTER-READABLE STORAGE MEDIUM**
VERFAHREN ZUR STEUERUNG EINES LEISTUNGSSTRAHLPROZESSES, SOWIE ZUGEHÖRIGE RECHENGERÄT UND COMPUTERLESBARES SPEICHERMEDIUM
PROCÉDÉ DE CONTRÔLE D'UN PROCESSUS DE FAISCEAU DE PUISSANCE, DISPOSITIF INFORMATIQUE ET SUPPORT DE STOCKAGE LISIBLE PAR ORDINATEUR ASSOCIÉS

(30) Priority: 06.10.2023 GB 202315357
(43) Date of publication of application: 07.05.2025
(73) Proprietor: Rolls-Royce plc, London N1 9FX (GB)
(72) Inventor: Smith, Alistair, Derby, DE24 8BJ (GB); Lee, Kee Khoon, Derby, DE24 8BJ (GB); Kasim, Henry, Derby, DE24 8BJ (GB); Chan, Teck Kai, Derby, DE24 8BJ (GB)
(74) Representative: Rolls-Royce plc

(56) References cited:
- WO-A2-2012/004491
- CN-A- 101 905 380
- JP-A- 2017 159 319

## Description

### FIELD

The present invention relates to a method for controlling a power beam process, a control system, and a non-transitory computer-readable storage medium.

### BACKGROUND

A power beam process, for example, an electron beam welding process, may offer significantly greater depth of penetration as compared to a conventional arc welding process. Further, the power beam process may offer precise control over a power beam which may provide accurate and controlled heat during the power beam process. The power beam processes are highly automated processes and hence require consistency to be maintained. Various parameters, such as an overall power, a beam diameter, and a power distribution of the power beam may contribute to a repeatability of the power beam process. Currently, these parameters may be verified through process control test pieces over which the power beam is passed using a fixed set of parameters and the resulting process control test pieces are assessed. Similarly, to validate the parameters for a particular application, a series of trials are carried out on the process control test pieces before a final validation on a representative sample. Further, each machine performing the power beam process is considered unique and therefore requires its own validation.

Data collected from various measuring systems may be only used to monitor the power beam process as there is limited understanding of which specific features lead to a good quality power beam process. The power beam process experts may therefore be unable to define precise thresholds for an optimal power beam process performance. This may lead to a need to continue with verifying the parameters through the process control test pieces, validating the parameters, and calibrating each machine performing the power beam process to control the power beam process. This may require a significant time and a significant operating cost.

Chinese patent application CN 101905380 A (describing the preamble of claims 1 and 13) shows a method for determining a process parameter during full penetration laser welding of a metal sheet with the thickness of less than 3 millimeters. The method involves: defining and establishing a full penetration laser welding process parameter window of the sheet; and determining the full penetration laser welding process parameter of the sheet. The method provides improved weld quality and cost- effectiveness.

### SUMMARY

According to a first aspect of the present invention, there is provided a method for controlling a power beam process as defined in claim 1.

The method includes determining the plurality of key discriminative features which can correlate with the process characteristics in a different and a more accurate manner. Specifically, the plurality of key discriminative features are features that are effective in discriminating between different qualities of the power beam processes, i.e. good welds and bad welds. In other words, the plurality of key discriminative features may be able to classify the power beam process into one of the plurality of predetermined quality indicators. A user or an operator may then set the control parameters (e.g., the beam parameters) accordingly. Therefore, the method may provide repeatability to the power beam process. In other words, a verification and a validation through process control test pieces may not be required. Therefore, the method may provide control of the power beam process at the point of use rather than reliance of periodic tests and measurements using the process control test pieces. This may reduce significant time and operational cost of carrying out the power beam process.

In some embodiments, the plurality of predetermined quality indicators includes at least a good quality indicator and a poor quality indicator. The method further includes dividing the set of test power distributions into a plurality of subsets of test power distributions, such that each of the plurality of subsets of test power distributions includes at least one test power distribution having the poor quality indicator as the predetermined quality indicator. Such division of the set of test power distributions may ensure that the set of test power distributions may be able to test a performance of a predictive model without any bias towards the good quality indicators.

In some embodiments, determining the plurality of key discriminative features further includes dividing the set of training power distributions into a plurality of subsets of training power distributions. Each of the plurality of subsets of training power distribution has the plurality of derived features of the corresponding training power distributions. Determining the plurality of key discriminative features further includes determining a set of discriminative features from the plurality of derived features of each of the plurality of subsets of training power distributions by performing descriptive analytics on the plurality of derived features of the corresponding subset of training power distributions. Each set of discriminative features includes a plurality of discriminative features selected from the plurality of derived features. Determining the plurality of key discriminative features further includes selecting a predefined number of the discriminative features from each set of discriminative features based on a number of occurrences of the plurality of discriminative features in the corresponding set of discriminative features and collating the selected discriminative features from each set of discriminative features to form the plurality of key discriminative features. Thus, the method may leverage on descriptive analytics to determine and select the plurality of key discriminative features from the plurality of derived features. Further, such selected discriminative features may have a greater correlation with the plurality of predetermined quality indicators.

In some embodiments, the method further includes training a predictive model by using the plurality of key discriminative features of the set of training power distributions and validating the trained predictive model by using the set of test power distributions. Thus, the method may also be used to train the predictive model using the training dataset and validate the trained predictive model by using the test dataset. Since the training dataset is mutually exclusive from the test dataset, the validation may be accurate and without any bias.

In some embodiments, validating the trained predictive model further includes providing the test dataset to the trained predictive model; classifying, via the trained predictive model, each value of the plurality of key discriminative features of the test power distribution of the set of test power distributions into one of the plurality of predetermined quality indicators; and validating the trained predictive model by comparing, for each of the test power distributions, the predetermined quality indicator classified by the trained predictive model with the predetermined quality indicator in the test dataset. Thus, the trained predictive model may be validated by comparing the predicted quality results, i.e., the predetermined quality indicator classified by the trained predictive model with the actual quality results, i.e., the predetermined quality indicator in the test dataset.

In some embodiments, validating the trained predictive model further includes using at least one evaluation criteria to determine a performance of the trained predictive model. This may help the user to evaluate if the trained predictive model is reliable, i.e., if the trained predictive model will be able to provide a desired accuracy and/or repeatability.

In some embodiments, each of the plurality of input key discriminative features is classified into one of the plurality of predetermined quality indicators by using the validated predictive model. Therefore, the trained predictive model may provide quick results, i.e., the plurality of predetermined quality indicators. This may allow quick control of the power beam process without using any process control test pieces.

In some embodiments, a focus current or a working distance of the power beam is different across the plurality of test power beam processes. Accordingly, the plurality of beam parameters of the power beam may be different across the plurality of test power beam processes. Therefore, the plurality of power distributions of the power beam corresponding to the plurality of test power beam processes may be different from each other and a comprehensive data may be generated which may help in determining the key discriminative features more accurately.

According to the present invention, the plurality of beam parameters includes at least one of a Full Width Half Maximum (FWHM) of the power beam, a peak power of the power beam, a beam diameter of the power beam, a beam area of the power beam, a beam intensity of the power beam, a beam angle of the power beam, and a beam circularity of the power beam. Therefore, a large number of beam parameters of the power beam may be determined and consolidated in the comprehensive dataset to determine the key discriminative features more accurately.

In some embodiments, the method further includes generating a graphical representation of at least one of the plurality of key discriminative features indicating the predetermined quality indicators of the corresponding training power distributions and determining one or more planes that separate the graphical representation into a plurality of regions including a majority of the corresponding predetermined quality indicators. In some cases, the values of plurality of key discriminative features are indicated with the corresponding predetermined quality indicators. For example, different colour and/or shape may be used to indicate the corresponding predetermined quality indicators. Therefore, the graphical representation may provide the user with a visualization ability. The graphical representation may facilitate the user/operator to easily understand a correlation between the values of the key discriminative features and the predetermined quality indicators.

In some embodiments, each of the plurality of input key discriminative features is classified into one of the plurality of predetermined quality indicators by using the one or more planes. Therefore, the user may be able to identify the classified plurality of predetermined quality indicators for each of the plurality of input key discriminative features with the help of the one or more planes of the graphical representation.

In some embodiments, the method further includes determining one or more optimal values for the at least one of the plurality of key discriminative features based on the one or more planes. Therefore, the optimal values may be selected for the at least one of the plurality of key discriminative features and used to classify the future samples into one of the plurality of predetermined quality indicators.

In some embodiments, the method includes cleaning the comprehensive dataset prior to dividing the comprehensive dataset into the test dataset and the training dataset. Cleaning the comprehensive dataset includes removing duplicate power distributions from the plurality of power distributions. Therefore, the comprehensive dataset may be complete and accurate and may help to determine the key discriminative features more accurately.

In some embodiments, generating the comprehensive dataset further includes consolidating the plurality of power distributions with a corresponding timestamp of the corresponding test power beam process. Therefore, the comprehensive dataset may also include a corresponding date and/or time of when the plurality of test power beam processes are carried out.

In some embodiments, the power beam is an electron beam.

In some embodiments, the power beam process is an electron beam welding process.

According to a second aspect of the present invention, there is provided a control system as defined in claim 13, the control system including a computing device comprising a processor and a memory, and a process apparatus for performing the power beam process, wherein the memory has stored therein a plurality of instructions that when executed by the processor causes the control system to perform the method of the first aspect.

According to a third aspect of the present invention, there is provided a non-transitory computer-readable storage as defined in claim 14, the storage medium comprising instructions that, when executed, cause the processor of the control system of the second aspect to perform the method of the first aspect.

The term "test component" as used herein means any component that is suitable to be tested using the method of the present invention. The test component may be a production component or a non-saleable component. The test component may be a component of a gas turbine engine or a sample or part thereof. The test component may be an electrical component or a sample or part thereof. The test component may be a metal strip.

### BRIEF DESCRIPTION OF THE DRAWINGS

Embodiments will now be described by way of example only, with reference to the Figures, in which:
**FIG. 1** illustrates a schematic block diagram of a control system used for controlling a power beam process;
**FIGS. 2A** **and** **2B** illustrate a flowchart of a method for controlling the power beam process;
**FIG. 3** illustrates an exemplary process flow of the method;
**FIG. 4** illustrates an exemplary power distribution of a power beam;
**FIG. 5** illustrates an exemplary test component;
**FIG. 6** illustrates an exemplary comprehensive dataset;
**FIG. 7A** illustrates a schematic block diagram of a predictive model;
**FIG. 7B** illustrates a schematic block diagram of a trained predictive model;
**FIG. 7C** illustrates a schematic block diagram of a validated predictive model; and
**FIG. 8** illustrates an exemplary graphical representation.

### DETAILED DESCRIPTION

Aspects and embodiments of the present invention will now be discussed with reference to the accompanying figures. Further aspects and embodiments will be apparent to those skilled in the art.

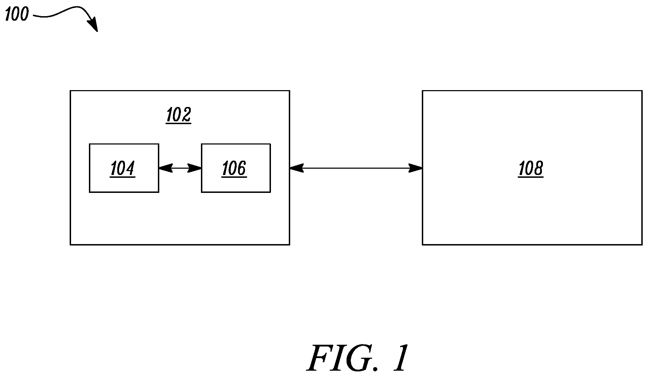

**FIG. 1** shows a schematic block diagram of a control system 100 used for controlling a power beam process which uses a power beam. In some embodiments, the power beam process is an electron beam welding process. In some embodiments, the power beam is an electron beam. In some embodiments, the power beam process is a laser beam welding process. In some embodiments, the power beam is a laser beam. In some embodiments, the power beam process is a deposition process, a cutting process, a melting process, and the like. In some embodiments, the power beam process may be used for processing (e.g., welding) different components of a gas turbine engine (not shown) and/or electrical components (not shown).

Referring to FIG. 1, the control system 100 includes a computing device 102 and a process apparatus 108 for performing the power beam process. The computing device 102 is communicably coupled to the process apparatus 108.

The computing device 102 includes a processor 104 and a memory 106. The processor 104 and the memory 106 are communicably coupled to each other. The memory 106 is configured to store therein a plurality of instructions that when executed by the processor 104 causes the control system 100 to perform one or more operations disclosed herein. In some embodiments, the computing device 102 may also include a user interface (not shown) communicably coupled to the processor 104. The user interface may include an input device and/or an output device. In some examples, the user interface may include a keyboard, a mouse, a display, and the like. A user or an operator may interact with the user interface to enter an input information or to obtain an output information.

The process apparatus 108 may carry out the power beam process based on the instructions received from the computing device 102. The process apparatus 108 may include one or more components that may be required to carry out the power beam process. In some embodiments, the one or more components may include a power beam emitter, a control mechanism for the power beam emitter, a power supply, a chamber, and the like.

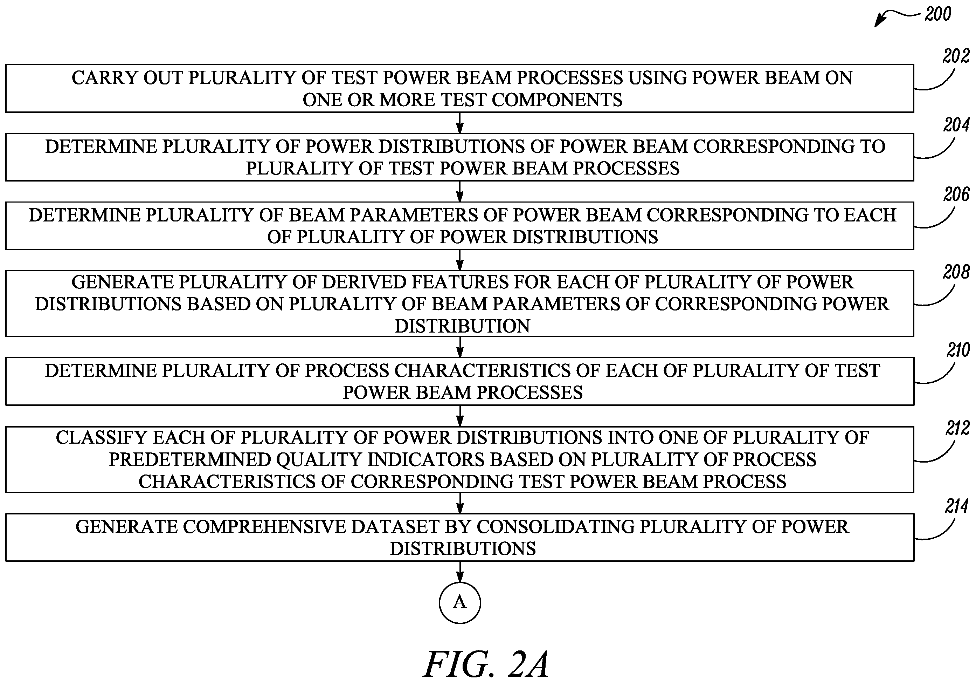

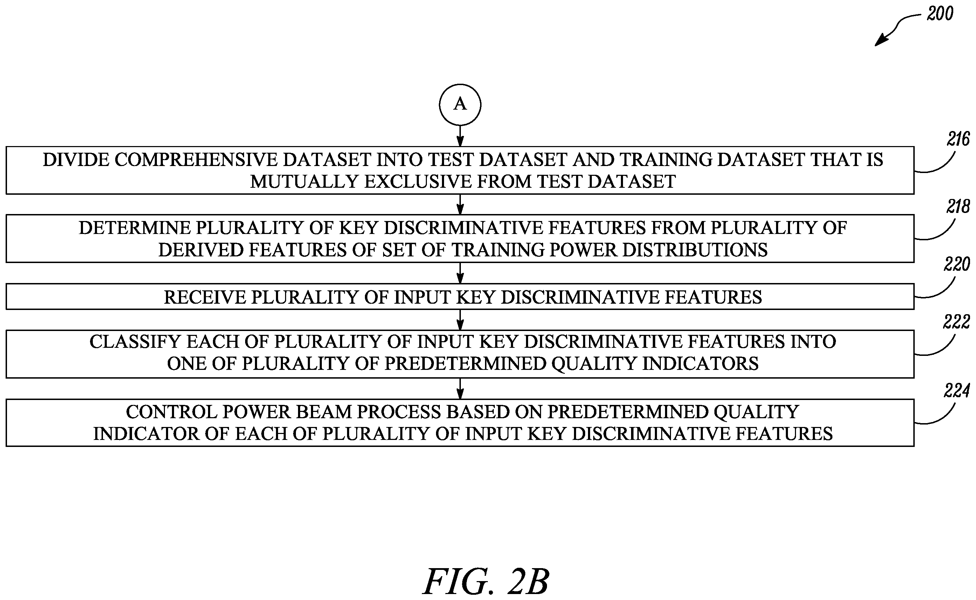

**FIGS. 2A** **and** **2B** show a flowchart of a method 200 for controlling the power beam process.

At step 202, the method 200 includes carrying out a plurality of test power beam processes using the power beam on one or more test components, which may be for example one or more production components or one or more non-saleable components. In some embodiments, the one or more test components may be one or more metal strips. In some cases, the one or more test components may be components of a gas turbine and/or may be electrical components. In some cases, the one or more test components may be one or more samples of the components of the gas turbine and/or the electrical components.

At step 204, the method 200 includes determining a plurality of power distributions of the power beam corresponding to the plurality of test power beam processes. Each of the plurality of power distributions is a distribution of a beam intensity of the power beam with respect to a distance from a centre of the power beam. In some embodiments, a focus current or a working distance of the power beam is different across the plurality of test power beam processes. Therefore, the plurality of power distributions of the power beam corresponding to the plurality of test power beam processes may be different from each other.

At step 206, the method 200 includes determining a plurality of beam parameters of the power beam corresponding to each of the plurality of power distributions. The plurality of beam parameters includes at least one of a Full Width Half Maximum (FWHM) of the power beam, a peak power of the power beam, a beam diameter of the power beam, a beam area of the power beam, a beam intensity of the power beam, a beam angle of the power beam, and a beam circularity of the power beam. In some embodiments, the plurality of beam parameters may include other beam parameters that may be derived from the power distributions. Therefore, a large number of beam parameters of the power beam may be determined and considered for controlling the power beam process.

At step 208, the method 200 includes generating a plurality of derived features for each of the plurality of power distributions based on the plurality of beam parameters of the corresponding power distribution. Each of the plurality of derived features is obtained by combining two or more of the plurality of beam parameters of the corresponding power distribution. In some examples, the plurality of derived features may be different ratios, sums, or differences of the two or more of the plurality of beam parameters of the corresponding power distribution.

At step 210, the method 200 includes determining a plurality of process characteristics of each of the plurality of test power beam processes. The plurality of process characteristics includes at least one of a weld depth and a weld width. The plurality of process characteristics are determined by performing various measurements on the one or more test components after carrying out the plurality of test power beam processes, or by visual inspection of the one or more test components after carrying out the plurality of test power beam processes.

At step 212, the method 200 includes classifying each of the plurality of power distributions into one of a plurality of predetermined quality indicators based on the plurality of process characteristics of the corresponding test power beam process. Each of the plurality of predetermined quality indicators may correspond to a quality of a test power beam process from the plurality of test power beam processes. In some embodiments, the plurality of predetermined quality indicators includes at least a good quality indicator and a bad quality indicator. In case the test power beam process is the electron beam welding process or the laser beam welding process, the predetermined quality indicator being a good weld indicator or a poor weld indicator. In some embodiments, the plurality of predetermined quality indicators may also include a quality rating or a quality score.

At step 214, the method 200 includes generating a comprehensive dataset by consolidating the plurality of power distributions with the corresponding plurality of derived features, the corresponding plurality of beam parameters, the corresponding plurality of process characteristics, and the corresponding predetermined quality indicator. In some embodiments, the comprehensive dataset is stored in a memory (e.g., the memory 106 of the computing device 102 shown in FIG. 1).

In some embodiments, generating the comprehensive dataset further includes consolidating the plurality of power distributions with a corresponding timestamp of the corresponding test power beam process. In some embodiments, the timestamp may include a date and/or a time of carrying out the corresponding test power beam process. In some embodiments, generating the comprehensive dataset may further include annotating one or more conditions (e.g., environmental conditions) of the test power beam processes with the respective test power beam processes.

At step 216, the method 200 includes dividing the comprehensive dataset into a test dataset and a training dataset that is mutually exclusive from the test dataset. The test dataset includes a set of test power distributions from the plurality of power distributions and the training dataset includes a set of training power distributions from the plurality of power distributions.

In some embodiments, the method 200 includes dividing the set of test power distributions into a plurality of subsets of test power distributions, such that each of the plurality of subsets of test power distributions includes at least one test power distribution having the poor quality indicator as the predetermined quality indicator.

In some embodiments, the method 200 further includes cleaning the comprehensive dataset prior to dividing the comprehensive dataset into the test dataset and the training dataset. In some embodiments, cleaning the comprehensive dataset includes removing duplicate power distributions from the plurality of power distributions. In some embodiments, cleaning the comprehensive dataset may include removing the test power beam processes having incorrect data, the test power beam processes having incomplete data, the test power beam processes having corrupted data, and/or the test power beam processes having incorrectly formatted data from the comprehensive dataset.

At step 218, the method 200 includes determining a plurality of key discriminative features from the plurality of derived features of the set of training power distribution. The plurality of key discriminative features may correlate with the process characteristics in a different and a more accurate manner. Specifically, the plurality of key discriminative features are features that are effective in discriminating between different qualities of the power beam processes, i.e. good welds and bad welds. In other words, the plurality of key discriminative features is able to classify the power beam process into one of the plurality of predetermined quality indicators.

In some embodiments, determining the plurality of key discriminative features further includes dividing the set of training power distributions into a plurality of subsets of training power distributions. Each of the plurality of subsets of training power distribution has the plurality of derived features of the corresponding training power distributions. In some embodiments, determining the plurality of key discriminative features further includes determining a set of discriminative features from the plurality of derived features of each of the plurality of subsets of training power distributions by performing descriptive analytics on the plurality of derived features of the corresponding subset of training power distributions. Each set of discriminative features includes a plurality of discriminative features selected from the plurality of derived features.

In some embodiments, determining the plurality of key discriminative features further includes selecting a predefined number of the discriminative features from each set of discriminative features based on a number of occurrences of the plurality of discriminative features in the corresponding set of discriminative features and collating the selected discriminative features from each set of discriminative features to form the plurality of key discriminative features. For instance, five of the discriminative features from each set of discriminative features may be selected based on the number of occurrences of the plurality of discriminative features in the corresponding set of discriminative features. Such selected discriminative features may have a greater correlation with the plurality of predetermined quality indicators.

At step 220, the method 200 further includes receiving a plurality of input key discriminative features. For example, values of the key discriminative features may be retrieved from the memory 106 shown in FIG. 1 or may be selected or provided by the user/operator via the user interface.

At step 222, the method 200 includes classifying each of the plurality of input key discriminative features into one of the plurality of predetermined quality indicators. Specifically, the method 200 includes classifying each value of the plurality of input key discriminative features into one of the plurality of predetermined quality indicators. For example, the method 200 includes classifying each value of the plurality of input key discriminative features into one of the good quality indicator and the poor quality indicator.

At step 224, the method 200 includes controlling the power beam process based on the predetermined quality indicator of each of the plurality of input key discriminative features. In other words, the method 200 includes controlling the power beam process based on the classified predetermined quality indicator of each of the plurality of input key discriminative features. The method 200 may control the power beam process more precisely and accurately according to the classified predetermined quality indicator of each of the plurality of input key discriminative features. In some embodiments, the process apparatus 108 shown in FIG. 1 may be used to control the power beam process according to the classified predetermined quality indicator of each of the plurality of input key discriminative features.

In some embodiments, the method 200 further includes training a predictive model by using the plurality of key discriminative features of the set of training power distributions. In an embodiment, the predictive model includes a decision tree classification model. In an embodiment, the predictive model includes a machine learning model, for example a decision tree classification model.

In some embodiments, the method 200 further includes validating the trained predictive model by using the set of test power distributions. In some embodiments, validating the trained predictive model further includes providing the test dataset to the trained predictive model. In some embodiments, validating the trained predictive model further includes classifying, via the trained predictive model, each value of the plurality of key discriminative features of the test power distribution of the set of test power distributions into one of the plurality of predetermined quality indicators. For example, the trained predictive model may classify each value of the plurality of key discriminative features of the test power distribution of the set of test power distributions into the good quality indicator or the poor quality indicator.

In some embodiments, validating the trained predictive model further includes validating the trained predictive model by comparing, for each of the test power distributions, the predetermined quality indicator classified by the trained predictive model with the predetermined quality indicator in the test dataset. In some embodiments, each of the plurality of input key discriminative features is classified into one of the plurality of predetermined quality indicators by using the validated predictive model. In some embodiments, validating the trained predictive model further includes using at least one evaluation criteria to determine a performance of the trained predictive model. In some embodiments, the at least one evaluation criteria may include an F1-score or an accuracy score to determine a performance or evaluate the trained predictive model.

In some embodiments, the method 200 further includes generating a graphical representation of at least one of the plurality of key discriminative features indicating the predetermined quality indicators of the corresponding training power distributions. In some embodiments, the method 200 further includes determining one or more planes that separate the graphical representation into a plurality of regions including a majority of the corresponding predetermined quality indicators. For example, one of the plurality of regions may include a majority of the good quality indicators and another of the plurality of regions may include a majority of the poor quality indicators.

In some embodiments, each of the plurality of input key discriminative features is classified into one of the plurality of predetermined quality indicators by using the one or more planes. In some embodiments, the values of different key discriminative features may be represented in different colour or different shapes. In some embodiments, different predetermined quality indicators may be indicated by different colours or shapes. Such graphical representation may facilitate the user/operator to clearly distinguish the key discriminative features that may contribute to different predetermined quality indicators.

In an embodiment, the graphical representation may be presented on the user interface, such as the display. In some embodiment, the user may select the at least one of the plurality of key discriminative features to include in the graphical representation. Therefore, the graphical representation may be an interactive representation. In some embodiments, the method 200 further includes determining one or more optimal values for the at least one of the plurality of key discriminative features based on the one or more planes.

Referring to FIGS. 1 and 2A-2B, in some embodiments, the memory 106 is configured to store therein a plurality of instructions that when executed by the processor 104 causes the control system 100 to perform the method 200. In some embodiments, a non-transitory computer-readable storage medium (e.g., the memory 106) includes instructions that, when executed, cause the processor 104 of the control system 100 to perform the method 200. The memory 106 may be interchangeably referred to as "the non-transitory computer-readable storage medium 106".

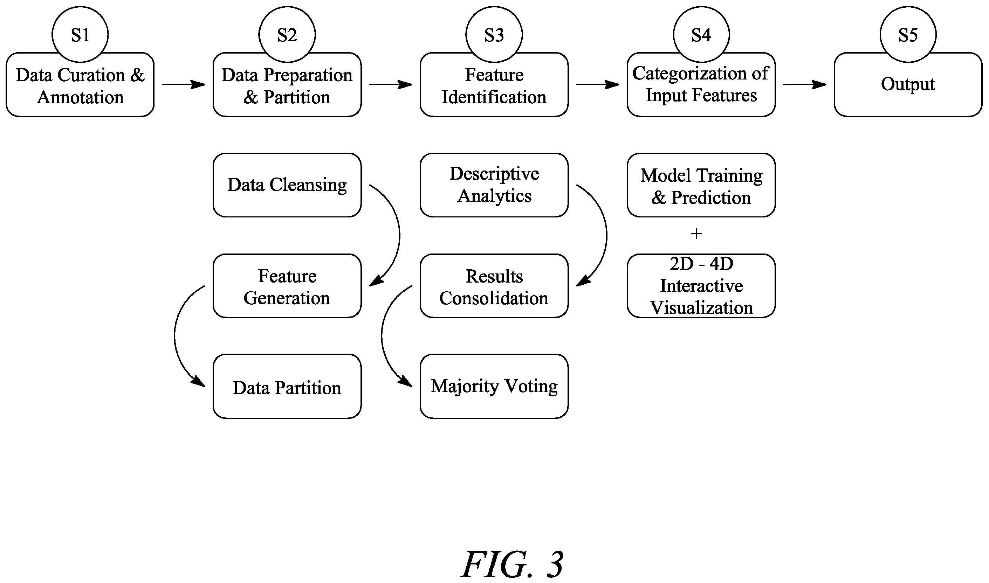

**FIG. 3** shows an exemplary process flow of the method 200 shown in FIGS. 2A-2B. As shown, the method 200 may be divided into five sub-modules S1-S5.

Referring to FIGS. 2A-2B and 3, in an embodiment, the sub-module S1 is used for data curation and annotation. Specifically, the sub-module S1 performs the step 214 of the method 200. In an embodiment, the sub-module S2 is used for data preparation and partitioning. Specifically, the sub-module S2 performs the step 216 of the method 200. In an embodiment, the sub-module S3 is used for feature identification. Specifically, the sub-module S3 performs the step 218 of the method 200. In an embodiment, the sub-module S4 is used for categorization of input features. Specifically, the sub-module S4 performs the step 222 of the method 200. In an embodiment, the sub-module S5 is used for providing an output. Specifically, the sub-module S5 performs the step 224 of the method 200.

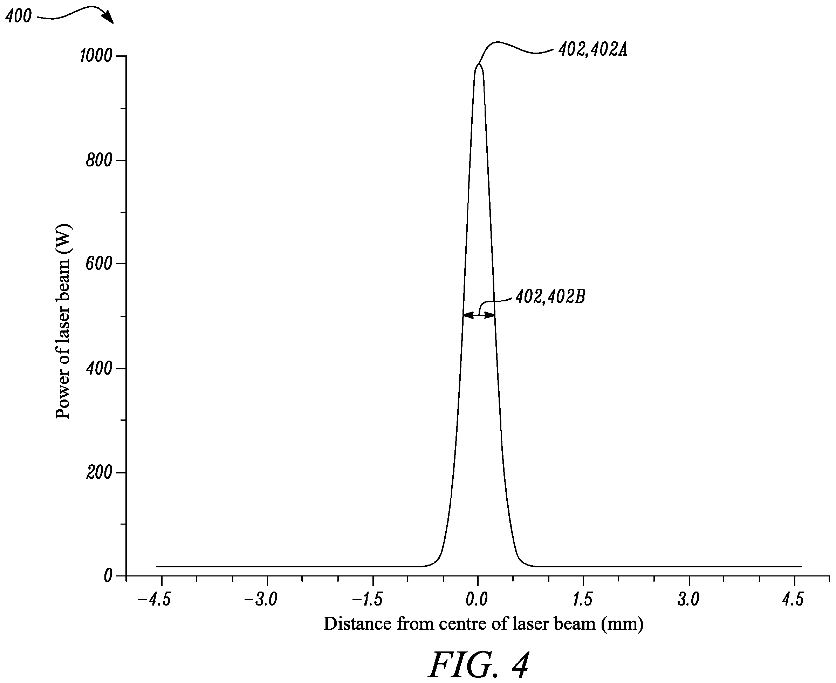

**FIG. 4** shows an exemplary power distribution 400 of the beam intensity from the plurality of power distributions of the power beam. Specifically, the power distribution 400 is a distribution of the beam power with respect to the distance from the centre of the power beam. The beam power of the power beam is shown in Watts (W) in the ordinate and the distance from the centre of the power beam is shown in millimeters (mm) in the abscissa. Further, the plurality of beam parameters is depicted with reference numeral 402.

The plurality of beam parameters 402 of the power beam is determined corresponding to each of the plurality of power distributions. In some embodiments, the power distribution 400 is used to obtain the plurality of beam parameters. In the illustrated example of FIG. 4, the peak power is shown as a peak power 402A and the FWHM is shown as a FWHM 402B. The power distribution 400 may further be used to obtain the beam diameter, the beam area, the beam intensity, the beam angle, the beam circularity, and the like.

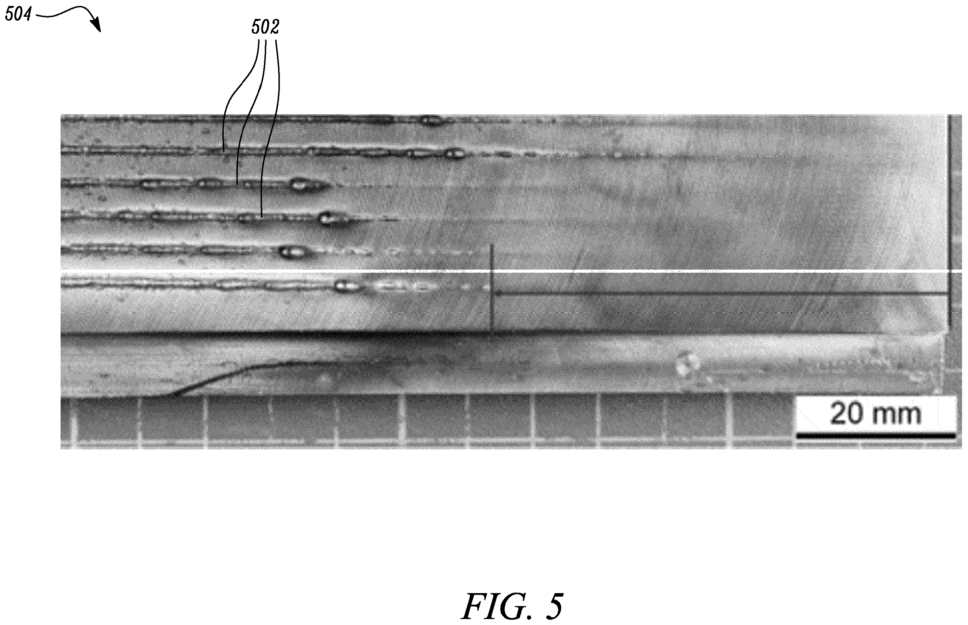

**FIG. 5** illustrates an exemplary test component 504 from the one or more test components. Specifically, FIG. 5 illustrates the test component 504 after the plurality of test power beam processes has been performed thereon.

Referring to FIGS. 2A-2B and 5, the plurality of test power beam processes is carried out using the power beam on the one or more test components 504, as per the step 202 of the method 200. The plurality of test power beam processes generates a corresponding plurality of test power beam outputs 502. The plurality of process characteristics of each of the plurality of test power beam processes is determined, as per the step 210 of the method 200. The plurality of process characteristics of each of the plurality of test power beam processes may be determined by measuring physical characteristics (e.g., the weld depth and the weld width) of the corresponding plurality of test power beam outputs 502.

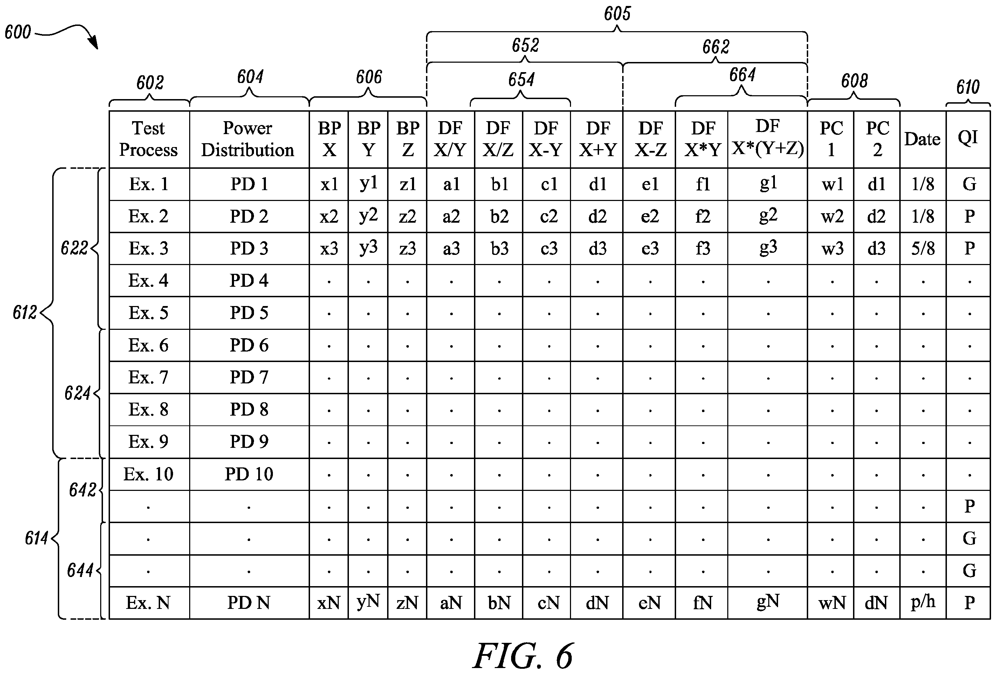

**FIG. 6** shows an exemplary comprehensive dataset 600. The method 200 shown in FIGS. 2A and 2B will be described further with reference to FIG. 6. The comprehensive dataset 600 includes a plurality of test power beam processes 602 (e.g., test power beam processes Ex.1 to Ex. N).

The comprehensive dataset 600 further includes a plurality of power distributions 604 (e.g., PD 1 to PD N) corresponding to the plurality of test power beam processes 602 (e.g., test power beam processes Ex.1 to Ex. N). The plurality of power distributions 604 is determined corresponding to the plurality of test power beam processes 602, as per the step 204 of the method 200.

The comprehensive dataset 600 further includes a plurality of beam parameters 606 (e.g., BP X, BP Y, and BP Z) corresponding to each of the plurality of power distributions 604 (e.g., PD 1 to PD N). The plurality of beam parameters 606 is determined corresponding to each of the plurality of power distributions 604, as per the step 206 of the method 200. In the illustrated example of FIG. 6, three beam parameters 606 are shown. However, the plurality of beam parameters 606 may include any number of beam parameters 606 as per desired application attributes. For example, the power distribution PD 1 may have a beam parameter BP X having a value x1 and a beam parameter BP Y having a value y1, and a beam parameter BP Z having a value z1.

The comprehensive dataset 600 further includes a plurality of derived features 605 for each of the plurality of power distributions 604 based on the plurality of beam parameters 606 (e.g., BP X, BP Y, and BP Z) of the corresponding power distribution 604 (e.g., PD 1 to PD N). The plurality of derived features 605 may be different ratios, sums, or differences of the two or more of the plurality of beam parameters 606 of the corresponding power distribution 604. The plurality of derived features 605 is generated for each of the plurality of power distributions 604 based on the plurality of beam parameters 606 of the corresponding power distribution 604, as per the step 208 of the method 200.

For example, the power distribution PD 1 may have a derived feature DF X/Y having a value a1. The value a1 is a ratio of the value x1 of the beam parameter BP X to the value y1 of the beam parameter BP Y. Similarly, values of the plurality of derived features 605 for each of the plurality of power distributions 604 may be obtained. In the illustrated example of FIG. 6, seven derived features 605 are shown. However, the plurality of derived features 605 may include any number of derived features 605, as per desired application attributes.

The comprehensive dataset 600 further includes a plurality of process characteristics 608 of each of the plurality of test power beam processes 602 (e.g., test power beam processes Ex.1 to Ex. N). In some embodiments, the plurality of process characteristics 608 includes at least one of a weld depth PC 1 and a weld width PC 2. For example, the test power beam process Ex.1 may have a first process characteristic, i.e., the weld depth PC 1 having a value w1 and a second process characteristic, i.e., the weld width PC 2 having a value d1.

Further, the comprehensive dataset 600 includes a predetermined quality indicator 610 (QI) corresponding to each of the plurality of power distributions 604. The predetermined quality indicator 610 corresponding to each of the plurality of power distributions 604 indicates a quality of the corresponding power distribution 604. In an example, the predetermined quality indicator 610 may include a good quality indicator G and a poor quality indicator P.

Each of the plurality of power distributions 604 is classified into one of the plurality of predetermined quality indicators 610 based on the plurality of process characteristics 608 of the corresponding test power beam process 602, as per the step 212 of the method 200. For example, the power distributions PD 1 is classified into the good quality indicator G based on the value w1 of PC 1 and/or the value w1 of PC 2 of the test power beam process Ex. 1. The value w1 of PC 1 and/or the value w1 of PC 2 may be process characteristics indicative of a good weld.

Therefore, the comprehensive dataset 600 is generated by consolidating the plurality of power distributions 604 with the corresponding plurality of derived features 605, the corresponding plurality of beam parameters 606, the corresponding plurality of process characteristics 608, and the corresponding predetermined quality indicator 610, as per the step 214 of the method 200. In some embodiments, the comprehensive dataset 600 is generated by consolidating the plurality of power distributions with a corresponding timestamp, such as a date and/or time of carrying out the corresponding test power beam process 602.

The comprehensive dataset 600 is further divided into a test dataset 614 and a training dataset 612 that is mutually exclusive from the test dataset 614, as per the step 216 of the method 200. The test dataset 614 includes a set of test power distributions (e.g., Ex. 10 to Ex. N) from the plurality of power distributions 604 and the training dataset 612 includes a set of training power distributions (e.g., Ex. 1 to Ex. 9) from the plurality of power distributions 604.

In some embodiments, the comprehensive dataset 600 is cleaned prior to being divided into the test dataset 614 and the training dataset 612. In some embodiments, the comprehensive dataset 600 is cleaned by removing duplicate power distributions 604 from the plurality of power distributions 604. In some embodiments, the comprehensive dataset 600 may be cleaned by removing the test power beam processes 602 having incorrect data, the test power beam processes 602 having incomplete data, the test power beam processes 602 having corrupted data, and/or the test power beam processes 602 having incorrectly formatted data from the comprehensive dataset 600.

Further, a plurality of key discriminative features 654, 664 is determined from the plurality of derived features 605 of the set of training power distributions, as per the step 218 of the method 200.

The set of training power distributions (e.g., Ex. 1 to Ex. 9) is further divided into a plurality of subsets of training power distributions 622, 624. As shown in FIG. 6, each of the plurality of subsets of training power distribution 622, 624 has the plurality of derived features of the corresponding training power distributions. A set of discriminative features 652, 662 from the plurality of derived features 605 is determined for each of the plurality of subsets of training power distributions 622, 624 by performing descriptive analytics. For example, the set of discriminative features 652 may be determined for the subset of training power distributions 622 and the set of discriminative features 662 may be determined for the subset of training power distributions 624 by performing descriptive analytics. Each set of discriminative features 652, 662 includes a plurality of discriminative features selected from the plurality of derived features 605.

Further, a predefined number of the discriminative features from each set of discriminative features 652, 662 is selected based on a number of occurrences of the plurality of discriminative features in the corresponding set of discriminative features 652, 662. In FIG. 6, the predetermined number of the discriminative features is two. However, the predetermined number may be any number, as per desired application attributes. In this example, the two of the discriminative features 654 from the set of discriminative features 652 are selected and the two of the discriminative features 664 from the set of discriminative features 662 are selected based on the number of occurrences of the plurality of discriminative features in the corresponding set of discriminative features 652, 662. Further, the selected discriminative features 654, 664 from each set of discriminative features 652, 662 are collated to form the plurality of key discriminative features 654, 664.

The set of test power distributions (e.g., Ex. 10 to Ex. N) is further divided into a plurality of subsets of test power distributions 642, 644, such that each of the plurality of subsets of test power distributions 642, 644 includes at least one test power distribution having the poor quality indicator P as the predetermined quality indicator 610.

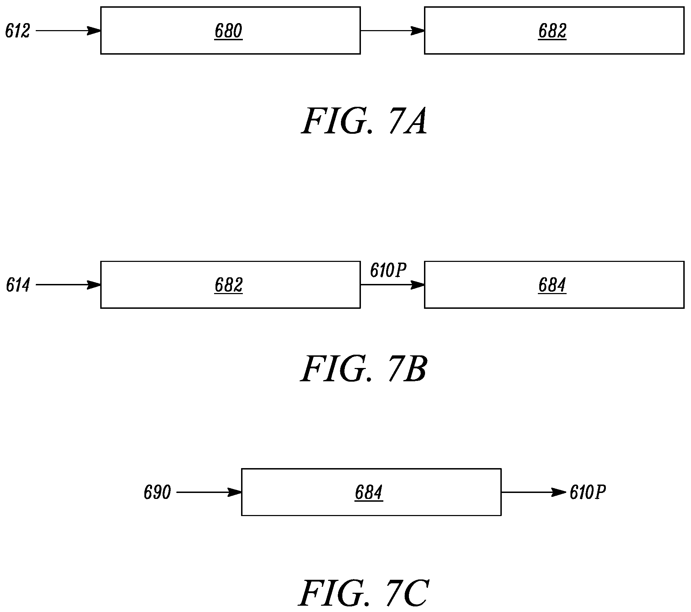

**FIG. 7A** shows a schematic block diagram of a predictive model 680.

In some embodiments, the predictive model 680 is trained by using the plurality of key discriminative features 654, 664 of the set of training power distributions of the training dataset 612 to generate the trained predictive model 682. As discussed above, in some embodiments, the predictive model 680 may be the machine learning model or the decision tree classification model.

**FIG. 7B** shows a schematic block diagram of the trained predictive model 682.

In some embodiments, the trained predictive model 682 is validated by using the set of test power distributions of the test dataset 614 to generate the validated predictive model 684. In some embodiments, the trained predictive model 682 classifies each value of the plurality of key discriminative features 654, 664 of the test power distribution of the set of test power distributions (e.g., Ex. 10 to Ex. N) into one of the plurality of predetermined quality indicators 610. For example, the trained predictive model 682 classifies each value of the plurality of key discriminative features 654, 664 of the test power distribution of the set of test power distributions into a corresponding predetermined quality indicator 610P. The corresponding predetermined quality indicator 610P is one of the plurality of predetermined quality indicators 610. In some embodiments, the trained predictive model 682 is validated by comparing, for each of the test power distributions, the predetermined quality indicator 610P classified by the trained predictive model 682 with the predetermined quality indicator 610 in the test dataset 614.

In some embodiments, the trained predictive model 682 is validated using at least one evaluation criteria to determine the performance of the trained predictive model 682. In some embodiments, F1 score and/or accuracy of the trained predictive model 682 may be used as the evaluation criteria.

Table 1 provided below shows an exemplary confusion matrix depicting prediction results of the trained predictive model 682 for the test dataset 614. Specifically, the confusion matrix includes a count of each of actual predetermined quality indicators (i.e., the predetermined quality indicators 610) and a count of each of predicted predetermined quality indicators (i.e., the predetermined quality indicators 610P) for the test dataset 614.

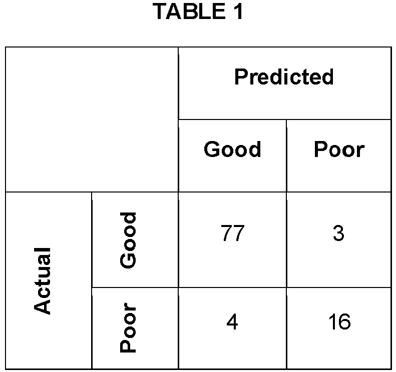

Table 2 provided below shows different evaluation parameters, such as the F1 score and the accuracy of the trained predictive model 682 for the test dataset 614 based on the confusion matrix provided in Table 1.

**TABLE 2**

| | **Mean** | **Standard Deviation** |
|---|---|---|
| Accuracy | 0.930 | 0.119 |
| F1-Score | 0.954 | 0.084 |

**FIG. 7C** shows a schematic block diagram of the validated predictive model 684.

In some embodiments, a plurality of input key discriminative features 690 is received, as per the step 220 of the method 200. Specifically, values of the plurality of input key discriminative features 690 may be provided to the validated predictive model 684 by the user via the user interface. In some embodiments, each of the plurality of input key discriminative features 690 is classified into one (e.g., 610P) of the plurality of predetermined quality indicators 610 by using the validated predictive model 684.

As discussed above, each of the plurality of input key discriminative features 690 is classified into one of the plurality of predetermined quality indicators. In some embodiments, each of the plurality of input key discriminative features 690 is classified into one of the plurality of predetermined quality indicators 610 by using the validated predictive model 684.

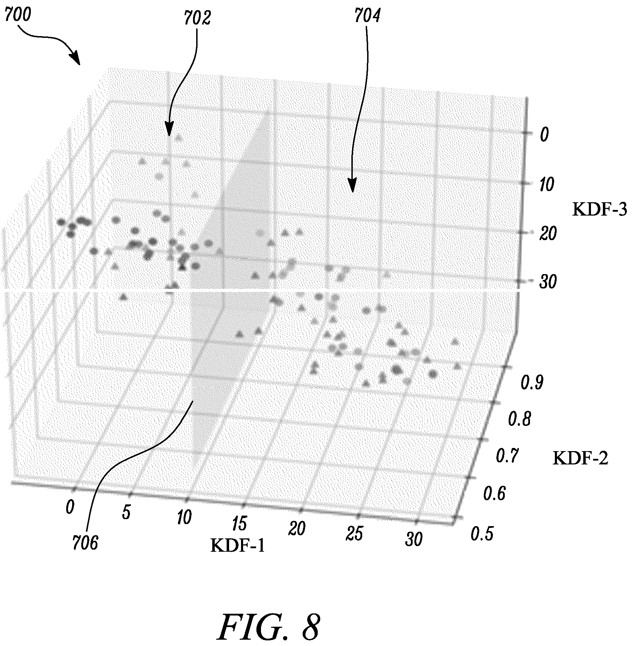

**FIG. 8** illustrates an exemplary graphical representation 700 of at least one of the plurality of key discriminative features 654, 664 indicating the predetermined quality indicators 610 of the corresponding training power distributions of the training dataset 612. In the illustrated embodiment of FIG. 8, the at least one of the plurality of key discriminative features 654, 664 includes key discriminative features KDF-1, KDF-2, KDF-3. Specifically, values of the key discriminative features KDF-1, KDF-2, KDF-3 indicating the predetermined quality indicators 610 of the corresponding training power distributions of the training dataset 612 are plotted in the graphical representation 700. In some embodiments, the values of the key discriminative features KDF-1, KDF-2, KDF-3 may be represented using a different colour and/or shape. In some embodiments, the values of the key discriminative features KDF-1, KDF-2, KDF-3 may indicate the predetermined quality indicators 610 using a different colour and/or shape for the different predetermined quality indicators 610.

In some embodiments, one or more planes 706 are determined that separate the graphical representation 700 into a plurality of regions 702, 704 including a majority of the corresponding predetermined quality indicators 610. For example, the region 702 may include a majority of the good quality indicators G and the region 704 may include a majority of the poor quality indicators P. In some embodiments, one or more optimal values for the at least one of the plurality of key discriminative features 654, 664 is determined based on the one or more planes 706.

In an embodiment, the graphical representation 700 may be displayed on the user interface. In such embodiments, the user may select a type of representation, such as, a two-dimensional representation, a three-dimensional representation, or a four-dimensional representation. In some embodiments, the user may select the at least one of the plurality of key discriminative features 654, 664 to be displayed in the graphical representation 700. In other words, the user may interact with the graphical representation 700 to select the at least one of the plurality of key discriminative features 654, 664 to be displayed in the graphical representation 700. Therefore, the graphical representation 700 may be interactive.

As discussed above, each of the plurality of input key discriminative features 690 is classified into one of the plurality of predetermined quality indicators 610. In some embodiments, each of the plurality of input key discriminative features 690 is classified into one of the plurality of predetermined quality indicators 610 by using the one or more planes 706.

The power beam process is controlled based on the predetermined quality indicator 610 of each of the plurality of input key discriminative features 690. For example, the user may set the control parameters (e.g., the beam parameters) according to the predetermined quality indicator 610 of each of the plurality of input key discriminative features 690. Therefore, the method 200 of the present invention provides a robust, efficient, and fully data driven process of determining the key discriminative features 654, 664 and controlling the power beam process that facilitates repeatability of the power beam process for different components and machines performing the power beam process.

## Claims

1. A method (200) for controlling a power beam process, the method (200) comprising:
carrying out a plurality of test power beam processes (602) using a power beam on one or more test components (504);
the method (200) being **characterised by** the following steps:
determining a plurality of power distributions (604) of the power beam corresponding to the plurality of test power beam processes (602), wherein each of the plurality of power distributions (604) is a distribution of a beam intensity of the power beam with respect to a distance from a centre of the power beam;
determining a plurality of beam parameters (606) of the power beam corresponding to each of the plurality of power distributions (604), wherein the plurality of beam parameters (606) comprises at least one of a Full Width Half Maximum (FWHM) of the power beam, a peak power of the power beam, a beam diameter of the power beam, a beam area of the power beam, a beam intensity of the power beam, a beam angle of the power beam, and a beam circularity of the power beam;
generating a plurality of derived features (605) for each of the plurality of power distributions (604) based on the plurality of beam parameters (606) of the corresponding power distribution (604), wherein each of the plurality of derived features (605) is obtained by combining two or more of the plurality of beam parameters (606) of the corresponding power distribution (604);
determining a plurality of process characteristics (608) of each of the plurality of test power beam processes (602), wherein the plurality of process characteristics includes at least one of a weld depth and a weld width, the plurality of process characteristics being determined by performing various measurements on the one or more test components after carrying out the plurality of test power beam processes, or by visual inspection of the one or more test components after carrying out the plurality of test power beam processes;
classifying each of the plurality of power distributions (604) into one of a plurality of predetermined quality indicators (610) based on the plurality of process characteristics (608) of the corresponding test power beam process (602);
generating a comprehensive dataset (600) by consolidating the plurality of power distributions (604) with the corresponding plurality of derived features (605), the corresponding plurality of beam parameters (606), the corresponding plurality of process characteristics (608), and the corresponding predetermined quality indicator (610);
dividing the comprehensive dataset (600) into a test dataset (614) and a training dataset (612) that is mutually exclusive from the test dataset (614), wherein the test dataset (614) comprises a set of test power distributions from the plurality of power distributions (604), and wherein the training dataset (612) comprises a set of training power distributions from the plurality of power distributions (604);
determining a plurality of key discriminative features (654, 664) from the plurality of derived features (605) of the set of training power distributions, the plurality of key discriminative features being good welds and bad welds;
receiving a plurality of input key discriminative features (690);
classifying each of the plurality of input key discriminative features (690) into one of the plurality of predetermined quality indicators (610); and
controlling the power beam process based on the predetermined quality indicator (610) of each of the plurality of input key discriminative features (690).

2. The method of claim 1, wherein the plurality of predetermined quality indicators (610) comprises at least a good quality indicator (G) and a poor quality indicator (P); the method (200) further comprising dividing the set of test power distributions into a plurality of subsets of test power distributions (642, 644), such that each of the plurality of subsets of test power distributions comprises at least one test power distribution having the poor quality indicator (P) as the predetermined quality indicator (610).

3. The method of claim 1 or 2, wherein determining the plurality of key discriminative features (605) further comprises:
dividing the set of training power distributions into a plurality of subsets of training power distributions (622, 624), each of the plurality of subsets of training power distributions (622, 624) having the plurality of derived features (605) of the corresponding training power distributions;
determining a set of discriminative features (652, 662) from the plurality of derived features (605) of each of the plurality of subsets of training power distributions by performing descriptive analytics on the plurality of derived features (605) of the corresponding subset of training power distributions, each set of discriminative features (652, 662) comprising a plurality of discriminative features selected from the plurality of derived features (605);
selecting a predefined number of the discriminative features from each set of discriminative features (652, 662) based on a number of occurrences of the plurality of discriminative features (605) in the corresponding set of discriminative features (652, 662); and
collating the selected discriminative features from each set of discriminative features to form the plurality of key discriminative features (654, 664).

4. The method of any preceding claim, further comprising:
training a predictive model (680) by using the plurality of key discriminative features (654, 664) of the set of training power distributions; and
validating the trained predictive model (682) by using the set of test power distributions.

5. The method of claim 4, wherein validating the trained predictive model (682) further comprises:
providing the test dataset (614) to the trained predictive model (682);
classifying, via the trained predictive model (682), each value of the plurality of key discriminative features (654, 664) of the test power distribution of the set of test power distributions into one of the plurality of predetermined quality indicators (610); and
validating the trained predictive model (682) by comparing, for each of the test power distributions, the predetermined quality indicator (610P) classified by the trained predictive model (682) with the predetermined quality indicator (610) in the test dataset (614).

6. The method of claim 5, wherein validating the trained predictive model (682) further comprises using at least one evaluation criteria to determine a performance of the trained predictive model (682).

7. The method of claim 5, wherein each of the plurality of input key discriminative features (654, 664) is classified into one of the plurality of predetermined quality indicators (610) by using the validated predictive model (684).

8. The method of preceding claim, wherein a focus current or a working distance of the power beam is different across the plurality of test power beam processes (602).

9. The method of any preceding claim, further comprising:
generating a graphical representation (700) of at least one of the plurality of key discriminative features (654, 664) indicating the predetermined quality indicators (610) of the corresponding training power distributions; and
determining one or more planes (706) that separate the graphical representation (700) into a plurality of regions (702, 704) comprising a majority of the corresponding predetermined quality indicators (610).

10. The method of claim 9, wherein each of the plurality of input key discriminative features is classified into one of the plurality of predetermined quality indicators (610) by using the one or more planes (706).

11. The method of claim 9 or 10, further comprising determining one or more optimal values for the at least one of the plurality of key discriminative features (654, 664) based on the one or more planes (706).

12. The method of any preceding claim, further comprising cleaning the comprehensive dataset (600) prior to dividing the comprehensive dataset into the test dataset (614) and the training dataset (612), wherein cleaning the comprehensive dataset (600) comprises removing duplicate power distributions (604) from the plurality of power distributions (604).

13. A control system (100) including a computing device (102) comprising a processor (104) and a memory (106), and a process apparatus (108) for performing the power beam process, **characterised in that** the memory (106) has stored therein a plurality of instructions that when executed by the processor (104) causes the control system (100) to perform the method (200) of any preceding claim.

14. A non-transitory computer-readable storage medium (106) comprising instructions that, when executed, cause the processor (104) of the control system of claim 13 to perform the method (200) of any one of claims 1 to 12.

## Patentansprüche

1. Verfahren (200) zur Steuerung eines Energiestrahlprozesses, wobei das Verfahren (200) Folgendes umfasst:
Verrichten einer Vielzahl von Testenergiestrahlprozessen (602) unter Verwendung eines Energiestrahls an einer oder mehreren Testkomponenten (504);
wobei das Verfahren (200) durch die folgenden Schritte gekennzeichnet ist:
Bestimmen einer Vielzahl von Energieverteilungen (604) des Energiestrahls, die der Vielzahl von Testenergiestrahlprozessen (602) entsprechen, wobei jede der Vielzahl von Energieverteilungen (604) eine Verteilung einer Strahlintensität des Energiestrahls in Bezug auf einen Abstand von einem Zentrum des Energiestrahls ist;
Bestimmen einer Vielzahl von Strahlparametern (606) des Energiestrahls, die jeder von der Vielzahl von Energieverteilungen (604) entsprechen, wobei die Vielzahl von Strahlparametern (606) mindestens eines aus einer Halbwertsbreite (FWHM) des Energiestrahls, einer Spitzenenergie des Energiestrahls, einem Strahldurchmesser des Energiestrahls, einem Strahlbereich des Energiestrahls, einer Strahlintensität des Energiestrahls, einem Strahlwinkel des Energiestrahls und einer Strahlzirkularität des Energiestrahls umfasst;
Erzeugen einer Vielzahl von abgeleiteten Merkmalen (605) für jede der Vielzahl von Energieverteilungen (604) basierend auf der Vielzahl von Strahlparametern (606) der entsprechenden Energieverteilung (604), wobei jedes der Vielzahl von abgeleiteten Merkmalen (605) durch Kombinieren von zwei oder mehr der Vielzahl von Strahlparametern (606) der entsprechenden Energieverteilung (604) erhalten wird;
Bestimmen einer Vielzahl von Prozesseigenschaften (608) von jedem der Vielzahl von Testenergiestrahlprozessen (602), wobei die Vielzahl von Prozesseigenschaften mindestens eines von einer Schweißtiefe und einer Schweißbreite beinhaltet, wobei die Vielzahl von Prozesseigenschaften durch Durchführen verschiedener Messungen an der einen oder den mehreren Testkomponenten nach Verrichten der Vielzahl von Testenergiestrahlprozessen oder durch visuelle Inspektion der einen oder mehreren Testkomponenten nach Verrichten der Vielzahl von Testenergiestrahlprozessen bestimmt wird;
Klassifizieren jeder der Vielzahl von Energieverteilungen (604) in einen von einer Vielzahl von vorbestimmten Qualitätsindikatoren (610) basierend auf der Vielzahl von Prozesseigenschaften (608) des entsprechenden Testenergiestrahlprozesses (602);
Erzeugen eines umfassenden Datensatzes (600) durch Konsolidieren der Vielzahl von Energieverteilungen (604) mit der entsprechenden Vielzahl von abgeleiteten Merkmalen (605), der entsprechenden Vielzahl von Strahlparametern (606), der entsprechenden Vielzahl von Prozesseigenschaften (608) und dem entsprechenden vorbestimmten Qualitätsindikator (610);
Unterteilen des umfassenden Datensatzes (600) in einen Testdatensatz (614) und einen Trainingsdatensatz (612), die sich gegenseitig aus dem Testdatensatz (614) ausschließen, wobei der Testdatensatz (614) einen Satz von Testenergieverteilungen aus der Vielzahl von Energieverteilungen (604) umfasst und wobei der Trainingsdatensatz (612) einen Satz von Trainingsenergieverteilungen aus der Vielzahl von Energieverteilungen (604) umfasst;
Bestimmen einer Vielzahl von Hauptunterscheidungsmerkmalen (654, 664) aus der Vielzahl von abgeleiteten Merkmalen (605) des Satzes von Trainingsenergieverteilungen, wobei die Vielzahl von Hauptunterscheidungsmerkmalen gute Schweißungen und schlechte Schweißungen sind;
Empfangen einer Vielzahl von Eingabe-Hauptunterscheidungsmerkmalen (690);
Klassifizieren jedes der Vielzahl von Eingabe-Hauptunterscheidungsmerkmalen (690) in einen der Vielzahl von vorbestimmten Qualitätsindikatoren (610); und
Steuern des Energiestrahlprozesses basierend auf dem vorbestimmten Qualitätsindikator (610) von jedem aus der Vielzahl von Eingabe-Hauptunterscheidungsmerkmalen (690).

2. Verfahren nach Anspruch 1, wobei die Vielzahl von vorbestimmten Qualitätsindikatoren (610) mindestens einen Indikator von guter Qualität (G) und einen Indikator von schlechter Qualität (P) umfasst; wobei das Verfahren (200) ferner das Aufteilen des Satzes von Testenergieverteilungen in eine Vielzahl von Teilmengen von Testenergieverteilungen (642, 644) umfasst, sodass jede von der Vielzahl von Teilmengen von Testenergieverteilungen mindestens eine Testenergieverteilung mit dem Indikator von schlechter Qualität (P) als dem vorbestimmten Qualitätsindikator (610) umfasst.

3. Verfahren nach Anspruch 1 oder 2, wobei das Bestimmen der Vielzahl von Hauptunterscheidungsmerkmalen (605) ferner Folgendes umfasst:
Unterteilen des Satzes von Trainingsenergieverteilungen in eine Vielzahl von Teilmengen von Trainingsenergieverteilungen (622, 624), wobei jede der Vielzahl von Teilmengen von Trainingsenergieverteilungen (622, 624) die Vielzahl von abgeleiteten Merkmalen (605) der entsprechenden Trainingsenergieverteilungen aufweist;
Bestimmen eines Satzes von Unterscheidungsmerkmalen (652, 662) aus der Vielzahl von abgeleiteten Merkmalen (605) von jeder der Vielzahl von Teilmengen von Trainingsenergieverteilungen durch Durchführen einer beschreibenden Analyse an der Vielzahl von abgeleiteten Merkmalen (605) der entsprechenden Teilmenge von Trainingsenergieverteilungen, wobei jeder Satz von Unterscheidungsmerkmalen (652, 662) eine Vielzahl von Unterscheidungsmerkmalen umfasst, die aus der Vielzahl von abgeleiteten Merkmalen (605) ausgewählt sind;
Auswählen einer vordefinierten Anzahl der Unterscheidungsmerkmale aus jedem Satz von Unterscheidungsmerkmalen (652, 662) basierend auf einer Anzahl von Vorkommen der Vielzahl von Unterscheidungsmerkmalen (605) in dem entsprechenden Satz von Unterscheidungsmerkmalen (652, 662); und
Sortieren der ausgewählten Unterscheidungsmerkmale aus jedem Satz von Unterscheidungsmerkmalen, um die Vielzahl von Hauptunterscheidungsmerkmalen (654, 664) zu bilden.

4. Verfahren nach einem vorhergehenden Anspruch, ferner umfassend:
Trainieren eines Vorhersagemodells (680) durch Verwendung der Vielzahl von Hauptunterscheidungsmerkmalen (654, 664) des Satzes von Trainingsenergieverteilungen; und
Validieren des trainierten Vorhersagemodells (682) durch Verwendung des Satzes von Testenergieverteilungen.

5. Verfahren nach Anspruch 4, wobei das Validieren des trainierten Vorhersagemodells (682) ferner Folgendes umfasst:
Bereitstellen des Testdatensatzes (614) an das trainierte Vorhersagemodell (682);
Klassifizieren, über das trainierte Vorhersagemodell (682), jedes Werts der Vielzahl von Hauptunterscheidungsmerkmalen (654, 664) der Testenergieverteilung des Satzes von Testenergieverteilungen in einen der Vielzahl von vorbestimmten Qualitätsindikatoren (610); und Validieren des trainierten Vorhersagemodells (682) durch Vergleichen, für jede der Testenergieverteilungen, des vorbestimmten Qualitätsindikators (610P), der durch das trainierte Vorhersagemodell (682) klassifiziert ist, mit dem vorbestimmten Qualitätsindikator (610) in dem Testdatensatz (614).

6. Verfahren nach Anspruch 5, wobei das Validieren des trainierten Vorhersagemodells (682) ferner das Verwenden mindestens eines Bewertungskriteriums umfasst, um eine Leistung des trainierten Vorhersagemodells (682) zu bestimmen.

7. Verfahren nach Anspruch 5, wobei jedes der Vielzahl von Eingabe-Hauptunterscheidungsmerkmalen (654, 664) durch Verwendung des validierten Vorhersagemodells (684) in einen von der Vielzahl von vorbestimmten Qualitätsindikatoren (610) klassifiziert wird.

8. Verfahren nach dem vorhergehenden Anspruch, wobei ein Fokusstrom oder ein Arbeitsabstand des Energiestrahls über die Vielzahl von Testenergiestrahlprozessen (602) hinweg unterschiedlich ist.

9. Verfahren nach einem vorhergehenden Anspruch, ferner umfassend:
Erzeugen einer grafischen Darstellung (700) von mindestens einem der Vielzahl von Hauptunterscheidungsmerkmalen (654, 664), die die vorbestimmten Qualitätsindikatoren (610) der entsprechenden Trainingsenergieverteilungen anzeigt; und
Bestimmen einer oder mehrerer Ebenen (706), die die grafische Darstellung (700) in eine Vielzahl von Regionen (702, 704) trennen, die eine Mehrheit der entsprechenden vorbestimmten Qualitätsindikatoren (610) umfassen.

10. Verfahren nach Anspruch 9, wobei jedes der Vielzahl von Eingabe-Hauptunterscheidungsmerkmalen durch Verwendung der einen oder mehreren Ebenen (706) in einen von der Vielzahl von vorbestimmten Qualitätsindikatoren (610) klassifiziert wird.

11. Verfahren nach Anspruch 9 oder 10, ferner umfassend das Bestimmen eines oder mehrerer optimaler Werte für das mindestens eine von der Vielzahl von Hauptunterscheidungsmerkmalen (654, 664) basierend auf der einen oder den mehreren Ebenen (706).

12. Verfahren nach einem vorhergehenden Anspruch, ferner umfassend das Reinigen des umfassenden Datensatzes (600) vor dem Unterteilen des umfassenden Datensatzes in den Testdatensatz (614) und den Trainingsdatensatz (612), wobei das Reinigen des umfassenden Datensatzes (600) das Entfernen doppelter Energieverteilungen (604) aus der Vielzahl von Energieverteilungen (604) umfasst.

13. Steuersystem (100), beinhaltend ein Rechengerät (102), das einen Prozessor (104) und einen Speicher (106) umfasst, und eine Prozessvorrichtung (108) zum Durchführen des Energiestrahlprozesses, **dadurch gekennzeichnet, dass** der Speicher (106) eine darin gespeicherte Vielzahl von Anweisungen aufweist, die, wenn sie durch den Prozessor (104) ausgeführt werden, das Steuersystem (100) dazu veranlassen, das Verfahren (200) nach einem vorhergehenden Anspruch durchzuführen.

14. Nichtflüchtiges computerlesbares Speichermedium (106), umfassend Anweisungen, die, wenn sie ausgeführt werden, den Prozessor (104) des Steuersystems nach Anspruch 13 dazu veranlassen, das Verfahren (200) nach einem der Ansprüche 1 bis 12 durchzuführen.

## Revendications

1. Procédé (200) permettant de commander un processus de faisceau de puissance, le procédé (200) comprenant :
la réalisation d'une pluralité de processus de faisceau de puissance d'essai (602) à l'aide d'un faisceau de puissance sur un ou plusieurs composants d'essai (504) ;
le procédé (200) étant **caractérisé par** les étapes suivantes :
la détermination d'une pluralité de distributions de puissance (604) du faisceau de puissance correspondant à la pluralité de processus de faisceau de puissance d'essai (602), chacune de la pluralité de distributions de puissance (604) étant une distribution d'une intensité de faisceau du faisceau de puissance par rapport à une distance à partir d'un centre du faisceau de puissance ;
la détermination d'une pluralité de paramètres de faisceau (606) du faisceau de puissance correspondant à chacune de la pluralité de distributions de puissance (604), ladite pluralité de paramètres de faisceau (606) comprenant au moins l'un d'une largeur totale à mi-hauteur (FWHM) du faisceau de puissance, d'une puissance de crête du faisceau de puissance, d'un diamètre de faisceau du faisceau de puissance, d'une empreinte de faisceau du faisceau de puissance, d'une intensité de faisceau du faisceau de puissance, d'un angle de faisceau du faisceau de puissance et d'une circularité de faisceau du faisceau de puissance ;
la génération d'une pluralité de caractéristiques dérivées (605) pour chacune de la pluralité de distributions de puissance (604) sur la base de la pluralité de paramètres de faisceau (606) de la distribution de puissance correspondante (604), chacune de la pluralité de caractéristiques dérivées (605) étant obtenue en combinant deux, ou plus, de la pluralité de paramètres de faisceau (606) de la distribution de puissance correspondante (604) ;
la détermination d'une pluralité de caractéristiques de processus (608) de chacun de la pluralité de processus de faisceau de puissance d'essai (602), ladite pluralité de caractéristiques de processus comprenant au moins l'une d'une profondeur de soudure et d'une largeur de soudure, la pluralité de caractéristiques de processus étant déterminée en réalisant diverses mesures sur le ou les composants d'essai après avoir effectué la pluralité de processus de faisceau de puissance d'essai, ou par inspection visuelle du ou des composants d'essai après avoir effectué la pluralité de processus de faisceau de puissance d'essai ;
la classification de chacune de la pluralité de distributions de puissance (604) en l'un d'une pluralité d'indicateurs de qualité prédéfinis (610) sur la base de la pluralité de caractéristiques de processus (608) du processus de faisceau de puissance d'essai correspondant (602) ;
la génération d'un ensemble de données complet (600) en consolidant la pluralité de distributions de puissance (604) avec la pluralité correspondante de caractéristiques dérivées (605), la pluralité correspondante de paramètres de faisceau (606), la pluralité correspondante de caractéristiques de processus (608) et l'indicateur de qualité prédéfini correspondant (610) ;
la division de l'ensemble de données complet (600) en un ensemble de données d'essai (614) et un ensemble de données d'entraînement (612) qui est mutuellement exclusif de l'ensemble de données d'essai (614), ledit ensemble de données d'essai (614) comprenant un ensemble de distributions de puissance d'essai à partir de la pluralité de distributions de puissance (604), et ledit ensemble de données d'entraînement (612) comprenant un ensemble de distributions de puissance d'entraînement à partir de la pluralité de distributions de puissance (604) ;
la détermination d'une pluralité de caractéristiques discriminantes clés (654, 664) à partir de la pluralité de caractéristiques dérivées (605) de l'ensemble de distributions de puissance d'entraînement, la pluralité de caractéristiques discriminantes clés étant de bonnes soudures et de mauvaises soudures ;
la réception d'une pluralité de caractéristiques discriminantes clés d'entrée (690) ;
la classification de chacune de la pluralité de caractéristiques discriminantes clés d'entrée (690) en l'un de la pluralité d'indicateurs de qualité prédéfinis (610) ; et
la commande du processus de faisceau de puissance sur la base de l'indicateur de qualité prédéfini (610) de chacune de la pluralité de caractéristiques discriminantes clés d'entrée (690).

2. Procédé de la revendication 1, ladite pluralité d'indicateurs de qualité prédéfinis (610) comprenant au moins un indicateur de bonne qualité (G) et un indicateur de mauvaise qualité (P) ; le procédé (200) comprenant en outre la division de l'ensemble de distributions de puissance d'essai en une pluralité de sous-ensembles de distributions de puissance d'essai (642, 644), de sorte que chacun de la pluralité de sous-ensembles de distributions de puissance d'essai comprenne au moins une distribution de puissance d'essai possédant l'indicateur de mauvaise qualité (P) en tant qu'indicateur de qualité prédéfini (610).

3. Procédé de la revendications 1 ou 2, ladite détermination de la pluralité de caractéristiques discriminantes clés (605) comprenant en outre :
la division de l'ensemble de distributions de puissance d'entraînement en une pluralité de sous-ensembles de distributions de puissance d'entraînement (622, 624), chacun de la pluralité de sous-ensembles de distributions de puissance d'entraînement (622, 624) possédant la pluralité de caractéristiques dérivées (605) des distributions de puissance d'entraînement correspondantes ;
la détermination d'un ensemble de caractéristiques discriminantes (652, 662) à partir de la pluralité de caractéristiques dérivées (605) de chacun de la pluralité de sous-ensembles de distributions de puissance d'entraînement en réalisant une analyse descriptive sur la pluralité de caractéristiques dérivées (605) du sous-ensemble correspondant de distributions de puissance d'entraînement, chaque ensemble de caractéristiques discriminantes (652, 662) comprenant une pluralité de caractéristiques discriminantes sélectionnées parmi la pluralité de caractéristiques dérivées (605) ;
la sélection d'un nombre prédéfini de caractéristiques discriminantes à partir de chaque ensemble de caractéristiques discriminantes (652, 662) sur la base d'un nombre d'occurrences de la pluralité de caractéristiques discriminantes (605) dans l'ensemble correspondant de caractéristiques discriminantes (652, 662) ; et
la compilation des caractéristiques discriminantes sélectionnées à partir de chaque ensemble de caractéristiques discriminantes pour former la pluralité de caractéristiques discriminantes clés (654, 664).

4. Procédé d'une quelconque revendication précédente, comprenant en outre :
l'entraînement d'un modèle prédictif (680) à l'aide de la pluralité de caractéristiques discriminantes clés (654, 664) de l'ensemble de distributions de puissance d'entraînement ; et
la validation du modèle prédictif entraîné (682) à l'aide de l'ensemble de distributions de puissance d'essai.

5. Procédé de la revendication 4, ladite validation du modèle prédictif entraîné (682) comprenant en outre :
la fourniture de l'ensemble de données d'essai (614) au modèle prédictif entraîné (682) ;
la classification, par l'intermédiaire du modèle prédictif entraîné (682), de chaque valeur de la pluralité de caractéristiques discriminantes clés (654, 664) de la distribution de puissance d'essai de l'ensemble de distributions de puissance d'essai en l'un de la pluralité d'indicateurs de qualité prédéfinis (610) ; et
la validation du modèle prédictif entraîné (682) en comparant, pour chacune des distributions de puissance d'essai, l'indicateur de qualité prédéfini (610P) classé par le modèle prédictif entraîné (682) à l'indicateur de qualité prédéfini (610) dans l'ensemble de données d'essai (614).

6. Procédé de la revendication 5, ladite validation du modèle prédictif entraîné (682) comprenant en outre l'utilisation d'au moins un critère d'évaluation pour déterminer une performance du modèle prédictif entraîné (682).

7. Procédé de la revendication 5, chacune de la pluralité de caractéristiques discriminantes clés d'entrée (654, 664) étant classée en l'un de la pluralité d'indicateurs de qualité prédéfinis (610) à l'aide du modèle prédictif validé (684).

8. Procédé de la revendication précédente, un courant de focalisation ou une distance de travail du faisceau de puissance étant différent à travers la pluralité de processus de faisceau de puissance d'essai (602).

9. Procédé d'une quelconque revendication précédente, comprenant en outre :
la génération d'une représentation graphique (700) d'au moins l'une de la pluralité de caractéristiques discriminantes clés (654, 664) indiquant les indicateurs de qualité prédéfinis (610) des distributions de puissance d'entraînement correspondantes ; et
la détermination d'un ou de plusieurs plans (706) qui séparent la représentation graphique (700) en une pluralité de zones (702, 704) comprenant une majorité des indicateurs de qualité prédéfinis correspondants (610).

10. Procédé de la revendication 9, chacune de la pluralité de caractéristiques discriminantes clés d'entrée étant classée en l'un de la pluralité d'indicateurs de qualité prédéfinis (610) à l'aide du ou des plans (706).

11. Procédé de la revendication 9 ou 10, comprenant en outre la détermination d'une ou de plusieurs valeurs optimales pour l'au moins une de la pluralité de caractéristiques discriminantes clés (654, 664) sur la base du ou des plans (706).

12. Procédé d'une quelconque revendication précédente, comprenant en outre le nettoyage de l'ensemble de données complet (600) avant de diviser l'ensemble de données complet en l'ensemble de données d'essai (614) et l'ensemble de données d'entraînement (612), ledit nettoyage de l'ensemble de données complet (600) comprenant la suppression des distributions de puissance en double (604) de la pluralité de distributions de puissance (604).

13. Système de commande (100) comprenant un dispositif informatique (102) comprenant un processeur (104) et une mémoire (106), et un appareil de processus (108) destiné à réaliser le processus de faisceau de puissance, **caractérisé en ce que** la mémoire (106) a stocké en elle une pluralité d'instructions qui, lorsqu'elles sont exécutées par le processeur (104), amènent le système de commande (100) à réaliser le procédé (200) d'une quelconque revendication précédente.

14. Support de stockage lisible par ordinateur non transitoire (106) comprenant des instructions qui, lorsqu'elles sont exécutées, amènent le processeur (104) du système de commande de la revendication 13 à réaliser le procédé (200) de l'une quelconque des revendications 1 à 12.
